# EUROPEAN PATENT APPLICATION

(11) **EP 4 650 627 A1**
(43) Date of publication of application: **19.11.2025**
(21) Application number: 25170580.2
(22) Date of filing: 15.04.2025
(51) Int. Cl.: F16J 15/08

(54) **A SEAL, A SEAL ASSEMBLY AND A METHOD**

(30) Priority: 13.05.2024 GB 202406713
(71) Applicant: Rolls-Royce plc, London N1 9FX (GB)
(72) Inventor: Chivers, Ben, Derby, DE24 8BJ (GB)
(74) Representative: Rolls-Royce plc

(57) **Abstract**

A seal (100) for sealing a longitudinally extending gap (102) between a first component (110) and a second component (120), wherein the seal comprises:
a first portion (130) extending in a longitudinal direction and configured to bridge the gap (102) between the first component (110) and the second component (120), wherein a sealing surface (132) of the first portion is configured to face the first and second components and is curved with a first convex section (134) configured to sealingly contact the first component (110), a second convex section (136) configured to sealingly contact the second component (120), and a concave section (138) provided between the first and second convex sections (134, 136); and
at least one second portion (150) coupled to the first portion (130) and configured to resiliently urge the first portion (130) into engagement with the first and second components (110, 120), wherein the second portion (150) comprises at least one opening (156) configured to fluidically communicate a pressure of a fluid on a first side of the first and second components (110,120) to a pressure surface (133) of the first portion (130) opposite the sealing surface (132).

## Description

### CROSS REFERENCE TO RELATED APPLICATIONS

This represents the first application directed towards the subject-matter.

### FIELD

This disclosure relates to a seal and a seal assembly and method.

### BACKGROUND

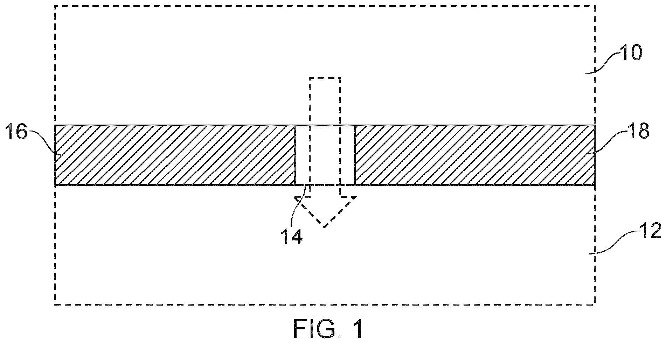

Various applications require a method of sealing against the flow of fluid from a high-pressure region 10 into a low-pressure region 12 through gaps 14 present between neighbouring components, e.g. panels 16, 18, as shown in Figure 1.

The solution applied to this problem is highly dependent on the properties of the system being sealed; for example, the temperature or nature of the fluids concerned may preclude certain sealing materials. Furthermore, deformation of the panels 16, 18 and relative movement between the panels to be sealed can add to the challenge.

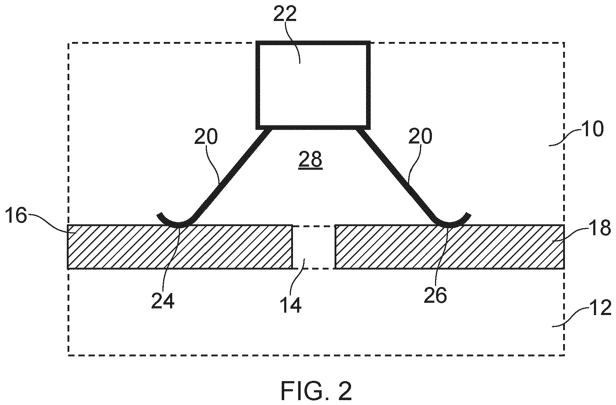

As shown in Figure 2, previously-proposed "Finger" or "Leaf" seals 20 consist of lengths of formed, thin metal which are mounted from a fixed structure 22 separate to the panels (e.g., a casing) 16, 18. The profile of the formed metal is such that it acts as a spring, exerting pressure against the back of the panels 16, 18 and so forming a contact seal 24, 26 in those locations. This type of seal uses a spring loading effect to ensure the contact seal 24, 26 is maintained during movement of the panel 16, 18 relative to the fixed structure 22, whilst permitting a degree of movement across the back of the panel.

However, Finger seals form a large cavity 28 between the seals which may fill with low pressure fluid; which may be an issue if exposure to it is to be minimised (e.g., if the fluid is hot, corrosive, etc.). Finger seals also create the seal line a long distance in from the panel edge. This can be an issue if exposure to low pressure fluid is to be minimised, or area covered by high pressure fluid maximised. Furthermore, the high profile of the Finger seals, can result in a large amount of blockage in the high-pressure region. Fingers seals can also be difficult to package into tight spaces due to the design trade between required seal movement range, seal size, material thickness, induced stresses, etc. As a result, integration of finger seals into a wider system whilst minimising leakage is challenging and typically results in high part count, low sealing efficiency solutions.

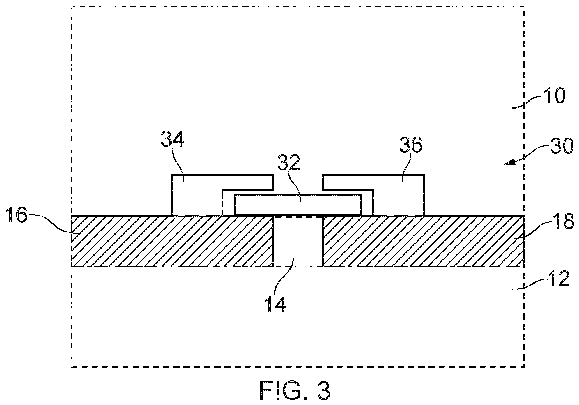

By contrast, as shown in Figure 3, previously-proposed strip seals 30 may use a thin, flat piece of metal 32 positioned over the panel gap 14 to block the leak path between the high and low pressure regions 10, 12. This thin strip of metal 32 is held in position by two retaining features 34, 36 which are attached to the back of the panels 16, 18. These retaining features 34, 36 possess sufficient clearance to accommodate movement of the panels without jamming or pinching the strip 32.

However, with strip seals the clearances between the retaining features and the sealing strip, which are required to accommodate the movement range of the panels, can lead to excessive leakage. Strip seals are also prone to binding and damage during movement if clearances are insufficient. Retaining features may also have to be welded or bonded onto the panels, increasing manufacturing complexity and potentially interfering with their operation. It can also be difficult to insert the sealing strip during assembly if access is limited.

### SUMMARY

In a first aspect of the present disclosure, there is provided a seal for sealing a longitudinally extending gap between a first component and a second component, wherein the seal comprises:
a first portion extending in a longitudinal direction and conFigured to bridge the gap between the first component and the second component, wherein a sealing surface of the first portion is conFigured to face the first and second components and is curved with a first curved (e.g. convex) section conFigured to sealingly contact the first component, a second curved (e.g. convex) section conFigured to sealingly contact the second component, and a third curved (e.g. concave) section provided between the first and second curved sections; and
at least one second portion coupled to the first portion and conFigured to resiliently urge the first portion into engagement with the first and second components, wherein the second portion comprises at least one opening conFigured to fluidically communicate a pressure of a fluid on a first side of the first and second components to a pressure surface of the first portion opposite the sealing surface.

The first curved section may be convex, e.g., outwardly curved. The second curved section may be convex, e.g., outwardly curved. The third curved section may be concave, e.g., inwardly curved. The sealing surface is curved when viewed in the longitudinal direction.

A cross-section of the sealing surface perpendicular to the longitudinal direction may be curved. Apexes of the first, second and third curved sections may extend in the longitudinal direction. The sealing surface may have a first point of inflection between the first curved section and the third curved section and a second point of inflection between the second curved section and the third curved section. The first and second points of inflection may extend in the longitudinal direction.

The seal may comprise a pair of second portions. One of the second portions may be coupled to the first portion at the first convex section. The other of the second portions may be coupled to the first portion at the second convex section.

The second portion may have a first end and a second end. The first end may be coupled to the first portion of the seal. The second portion may have a bend between the first and second ends. An apex defined by the bend may extend in the longitudinal direction. The second portion openings may extend across the bend of the second portion.

The second end of the second portion may be conFigured to engage a rigid mount spaced apart from the first and second components. The second end of the second portion may have a flat surface for engaging the rigid mount.

The first portion may be formed from a sheet of material. The second portion may be formed from a sheet of material. The first and second portions may be formed from a common sheet of material. At least one of the first and second portions may be formed from a metal.

An apex of the concave section may be spaced apart from a line joining contact points of the first and second convex sections by a first distance. The contact points of the first and second convex sections may be spaced apart by a second distance along the line joining contact points of the first and second convex sections. The first distance may be at least 5% of the second distance. The first distance may be less than 25% of the second distance. The first distance may be between approximately 5% and 25% of the second distance. The first distance may be substantially or approximately 10% of the second distance.

The first portion may be segmented with a plurality of first portion openings distributed along the length of the first portion. The seal may further comprise a plurality of segment covers conFigured to cover respective first portion openings. One edge of each segment cover may be attached to the first portion and the opposite edge of the segment cover may be free to slide over the first portion.

The seal, in particular the first portion, may be shaped to follow surfaces of the first and second components adjacent to the gap. The seal may follow a flat or curved surface. A contact surface of the first portion of the seal (e.g., the convex sections) may comprise a conformal layer to conform to the first and second components. The conformal layer may comprise rubber, copper, or any other conformal material.

In a second aspect there is provided a seal assembly comprising at least one of the seals of the first aspect. The seal assembly may comprise the first and second components. The seal assembly may comprise the rigid mount.

The seal assembly may comprise a plurality of the seals of the first aspect. The seals may be conFigured to abut one another at respective ends so as to seal respective gaps that meet at a point. Longitudinal axes of the gaps may be angled with respect to one another. The seal assembly may further comprise a cover portion conFigured to extend over the first portions of the respective ends of the seals where they abut. The second portion may not be present (e.g., may be removed) at the join between the respective ends.

In a third aspect there is provided a method of sealing a longitudinally extending gap between a first component and a second component, the method comprising extending the seal of the first aspect or the seal assembly of the second aspect across at least one gap.

The method may further comprise providing a plurality of the above-mentioned seals, and abutting the seals against one another at respective ends so as to seal respective gaps that meet at a point. The method may further comprise extending a cover portion over the first portions of the respective ends of the seals where they abut. The method may comprise removing the second portion of the seal at the respective ends of the seals where they abut.

### BRIEF DESCRIPTION OF THE DRAWINGS

Embodiments will now be described by way of example only with reference to the accompanying drawings, in which:
Figure 1 is a sectional view showing a pair of panels that require sealing.
Figure 2 is a sectional view showing a previously proposed finger seal arrangement.
Figure 3 is a sectional view showing a previously proposed strip seal arrangement.
Figure 4 is a sectional view showing a seal according to a first example.
Figure 5 is a perspective view showing the seal depicted in Figure 4.
Figure 6 is a further sectional view showing the seal depicted in Figure 4.
Figure 7 is a partial sectional view showing the seal depicted in Figure 4.
Figure 8 is a sectional view showing a seal according to a second example.
Figure 9 is a sectional view showing a seal according to a third example.
Figure 10 is a sectional view showing a seal according to a fourth example.
Figure 11 is a sectional view showing a seal according to a fifth example.
Figure 12 is a partial perspective view showing a seal according to a sixth example.
Figure 13 is a plan view showing a seal assembly according to a seventh example.
Figure 14. is a perspective view showing the seal assembly according to the seventh example. and
Figure 15. is a flowchart showing a method for sealing a gap.

### DETAILED DESCRIPTION

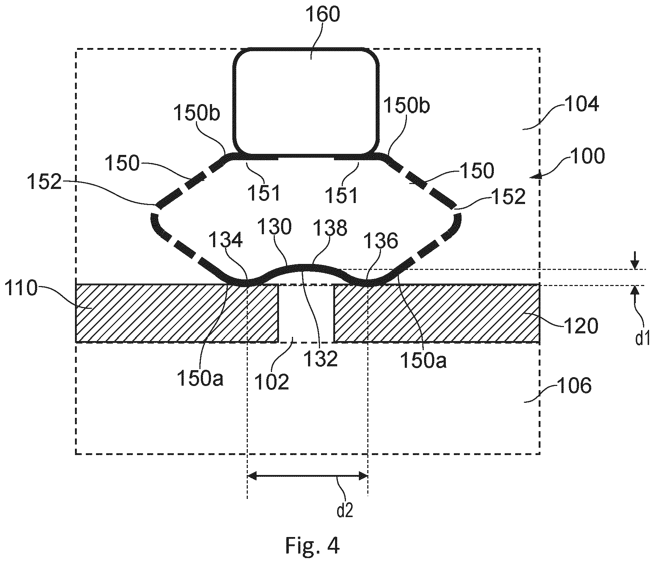

With reference to Figure 4, a seal 100 may seal a gap 102 extending in a longitudinal direction between a first component 110 and a second component 120. The first and second components 110, 120 may be panels that extend alongside each other. By way of example, the first and second components 110, 120 may be panels within a gas turbine engine. The seal 100 may restrict a fluid on a first side 104 of the first and second components 110, 120 from coming into contact with a fluid on a second side 106 of the first and second components 110, 120.

The seal 100 comprises a first portion 130 extending in the longitudinal direction. The first portion 130 is configured to bridge the gap 102 between the first and second components 110, 120. The first portion 130 comprises a sealing surface 132 that faces the first and second components 110, 120 and is configured to seal against the first and second components 110, 120, e.g., in a region close to the gap 102.

The sealing surface 132 is curved when viewed in the longitudinal direction. In particular, as depicted in Figure 4, a cross-section of the sealing surface perpendicular to the longitudinal direction may be curved. The sealing surface 132 comprises a first curved section 134 configured to sealingly contact the first component 110 and a second curved section 136 configured to sealingly contact the second component 120. The sealing surface 132 comprises a third curved section 138 provided between the first and second curved sections. The first and second curved sections 134, 136 may be convex, e.g., outwardly curved toward the respective first and second components 110, 120. The third curved section 138 may be concave, e.g., inwardly curved away from the gap 102.

As the curved sealing surface 132 transitions between the convex and concave sections, the sealing surface 132 may have a first point of inflection between the first and third curved sections 134, 138 and a second point of inflection between the second and third curved sections 136, 138. The first and second points of inflection may extend in the longitudinal direction.

Referring still to Figure 4, the seal 100 further comprises at least one second portion 150 extending in the longitudinal direction. The second portion 150 is coupled to the first portion 130 and is configured to resiliently urge the first portion 130 into engagement with the first and second components 110, 120. The second portion 150 may act as a spring pushing the first portion 130 against the first and second components 110, 120.

As depicted, the seal 100 comprises a pair of second portions 150. One of the second portions 150 may be coupled to the first portion 130 at the first curved section 134. The other of the second portions 150 may be coupled to the first portion 130 at the second curved section 136. However, it is also envisaged that the seal 100 may comprise a single second portion that is configured to apply a force to the first portion 130.

Each of the second portions has a first end 150a and a second end 150b. The first end 150a is coupled to the first portion 130 of the seal. By way of example, the first and second portions 130, 150 may be unitary. The second end 150b of the second portion 150 may engage a static rigid mount 160 spaced apart from the first and second components 110, 120. The seal 100 may thus be provided between the rigid mount 160 and the first and second components 110, 120. The rigid mount 160 may provide a reactive force to the second portion 150 of the seal 100. The second end 150b of the second portion 150 may be shaped to conform to the rigid mount 160. For example, the second end 150b may have a mount engaging surface 151 (which may be flat) for engaging a corresponding surface of the rigid mount 160.

The first portion 130 may be formed from a sheet of material. The second portion 150 may be formed from a sheet of material. The first and second portions 130, 150 may be formed from a common sheet of material. The first and second portions 130, 150 may be formed from a metal.

The seal 100, in particular the first portion 130, may be shaped to follow surfaces of the first and second components 110, 120 adjacent to the gap 102. For example, the first and second components 110, 120 may be substantially flat in the region of the gap 102 and the seal 100 may be shaped so that contact points on the sealing surface 132 extend in a straight line in the longitudinal direction. Alternatively, the seal 100 may be shaped so that contact points on the sealing surface 132 curve in the longitudinal direction, e.g., so as to follow a curve of the first and second components 110, 120. In any event, a contact surface of the first portion 130 of the seal (e.g., the convex sections) may comprise a conformal layer to conform to the first and second components 110, 120. The conformal layer may comprise rubber, copper or any other suitable conformal material.

Each of the second portions 150 may have a bend 152 between the first and second ends 150a, 150b. A line or apex 154 defined by the bend 152 may extend in the longitudinal direction. The bend 152 in the second portion 150 may provide the resilient properties of the second portion that resiliently urges the first portion 130 into engagement with the first and second components 110, 120.

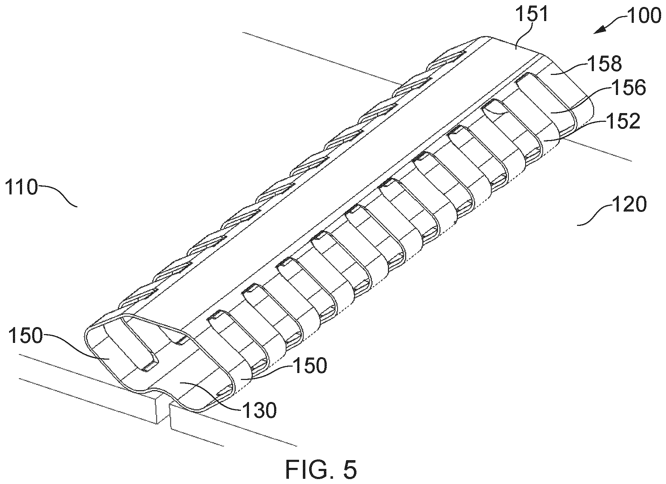

Referring now to Figure 5, each of the second portions 150 comprises at least one second portion opening 156. In the particular example shown, the second portions 150 each comprise a plurality of openings 156 distributed in the longitudinal direction. The openings 156 may be substantially elongate, e.g., extending from the mount engaging surface 151 towards the first portion 130. The second portion 150 may comprise a plurality of projections 158 provided between neighbouring openings 156. The projections 158 may extend from the mount engaging surface 151 and may connect the second portion 150 to the first portion 130. The openings 156 may extend across the bend 152 of the second portion. Likewise, the projections 158 may extend across the bend 152 of the second portion. As best depicted in Figure 5, the projections 153 and openings 158 may together form a ladder type arrangement.

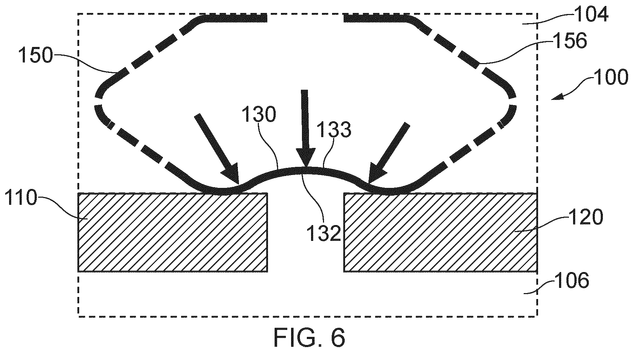

With reference to Figure 6, the openings 156 are configured to fluidically communicate a pressure of a fluid on the first side 104 of the first and second components 110, 120 to a pressure surface 133 of the first portion 130 opposite the sealing surface 132. The pressure of the fluid may thus urge the first portion 130 into sealing engagement with the first and second components 110, 120.

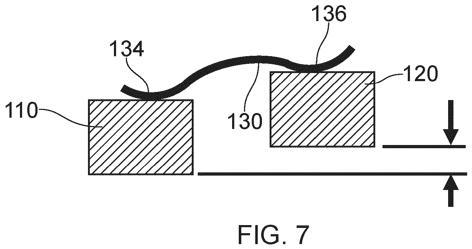

Referring now To Figure 7, the seal 100 can accommodate a misalignment of the first and second components 110, 120, e.g., with an edge of one of the components being offset from an edge of the other of the components. (The second portion 150 has been omitted from Figure 7 for clarity.) The misalignment may be perpendicular to a width of the gap 102. The seal 100 can effectively roll (about its longitudinal axis) and thanks to the curved sections 134, 136, the sealing surface 132 may continue to seal against the first and second components 110, 120.

Referring back to Figure 4, an apex (or top as viewed in Figure 4) of the third curved section 138 may be spaced apart from a line joining contact points of the first and second curved sections 134, 136 by a first distance d1. The line joining contact points of the first and second curved sections 134, 136 may (or may not) be tangential to the first and second curved sections 134, 136. The contact points of the first and second curved sections may be spaced apart by a second distance d2.

The first distance d1 may be at least 5% of the second distance d2. This minimum ratio may help ensure that there is sufficient clearance above the contact points to accommodate an edge of one of the components 110, 120 when the first and second components 110, 120 are misaligned (as depicted in Figure 7). However, the first distance d1 may be less than 50% or 25% of the second distance d2. This may limit the longitudinal rigidity of the seal 100. Having some longitudinal flex may be useful to allow the seal 100 to follow the shape of the first and second components 110, 120 or to aid installation/removal. By way of example, the first distance d1 may be substantially or approximately 10% of the second distance d2. This ratio may be an acceptable compromise between the two conflicting constraints.

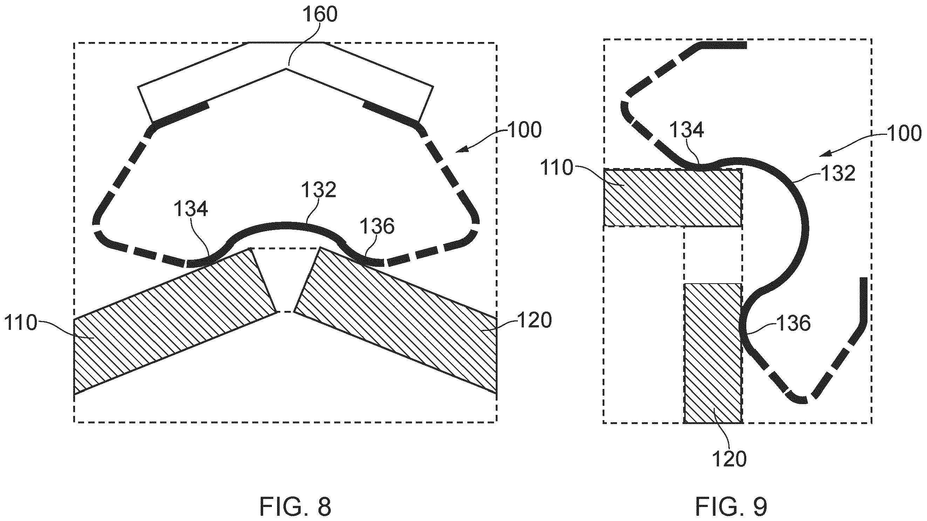

Referring now to Figures 8 and 9, the seal 100 may be adapted for a range of different first and second component 110, 120 arrangements. In the previously depicted arrangements, surfaces of the first and second components 110, 120 have been substantially co-planar or at least substantially parallel to one another. However, it is also envisaged that the seal 100 may be applied to first and second components 110, 120 with surfaces that are angled with respect to one another. In the example shown in Figure 8, surfaces of the first and second components 110, 120 may be at an angle with respect to one another that is between 0 and 90 degrees, e.g., approximately 45 degrees. In the example shown in Figure 9, surfaces of the first and second components 110, 120 may be at an angle of approximately 90 degrees with respect to one another. The seal 100, in particular the curved sealing surface 132, may be adapted to suit the relative angle of the first and second components 110, 120. For example, the curvature of the first and second curved surfaces 134, 136 may be centred on the surfaces of respective first and second components 110, 120.

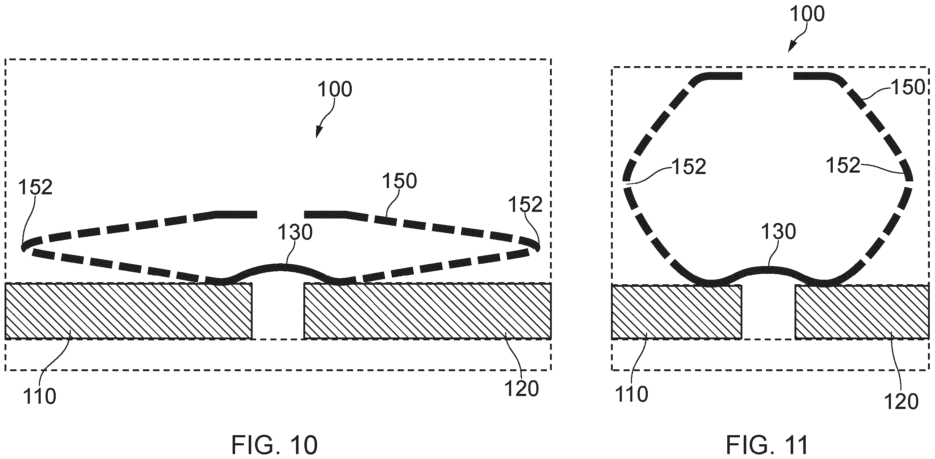

Furthermore, with reference to Figures 10 and 11, at least one of the angle of the bend 152 and height of the second portion 150 may be adjusted to suit a particular arrangement. For example, an interior angle of the bend 152 or height of the second portion 150 may be selected to tune the resilient force applied by the second portion or to match the spacing of the rigid mount. Figure 10 shows a more compact seal 100 with an acute interior angle at bend 152. Figure 11 shows a taller seal 100 with an obtuse interior angle at bend 152. Additionally, or alternatively, it is also contemplated that one or more of the size of the second portion openings 156, material thickness and material selection may be selected to tune the spring force provided by the second portion 150.

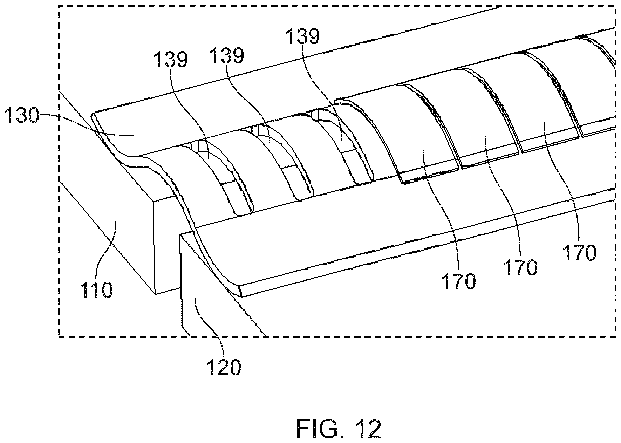

Referring now to FIGURE 12, the first portion 130 may be perforated or segmented with a plurality of first portion openings 139 distributed along the length of the first portion 130. (Figure 12 omits the second portions for clarity.) The openings 139 may reduce the longitudinal rigidity of the seal 100. Having some longitudinal flex may be useful to allow the seal 100 to follow the shape of the first and second components 110, 120. The seal 100 may further comprise a plurality of segment covers 170 configured to cover respective first portion openings 139. (Figure 12 shows some of the segment covers 170 removed to reveal the openings beneath.) The segment covers 170 may extend over the openings 139 and seal against a surface of the first portion 1320 surrounding the opening 139. A pressure of the fluid on the first side 104 of the first and second components 110, 120 may act upon the segment covers 170 to urge the segment covers to seal against the first portion 130. One edge of each segment cover 170 may be attached (e.g., by spot welding) to the first portion 130 and the opposite edge of the segment cover 170 may be free to slide over the first portion 130. This may facilitate longitudinal flex of the seal 100. The segment covers 170 may be formed from a sheet material, such as a metal foil.

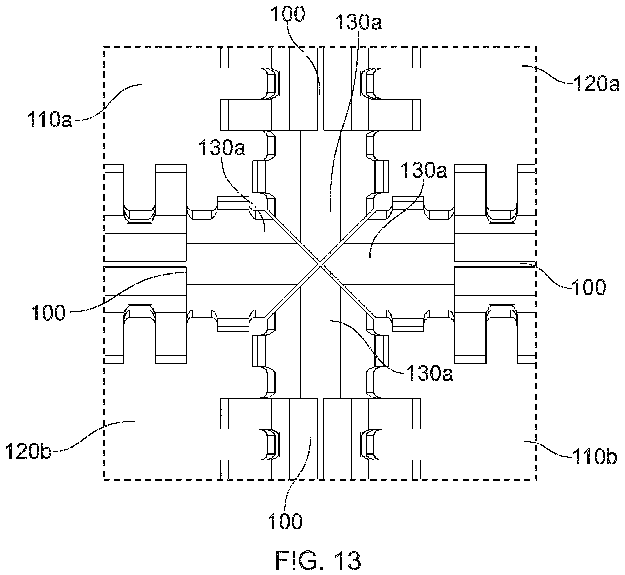

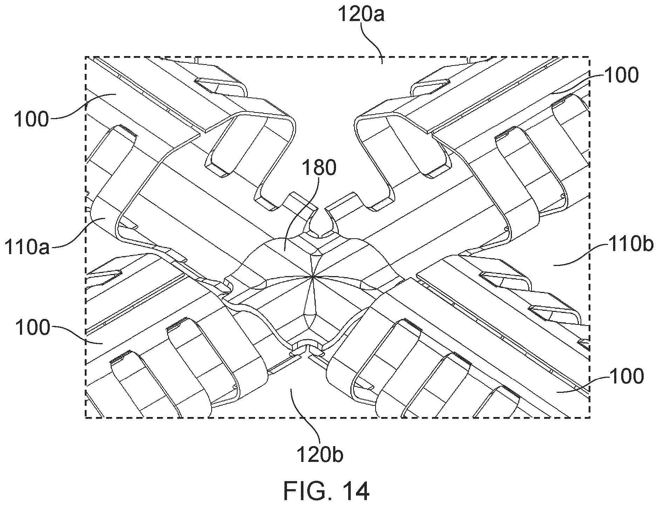

With reference to Figures 13 and 14, a plurality of the seals 100 may be provided to seal respective gaps 102 that may meet at a point. Accordingly, more than two components may be sealed. In the example shown in FIGs 13 and 14, there are four seals 100 sealing gaps between four corresponding components 110a, 110b, 120a, 120b. Longitudinal axes of the gaps may be angled with respect to one another and in the example shown they may be at 90 degrees to one another. Other numbers of seals 100 and angles are also contemplated. The seals 100 may be configured to abut one another at their respective ends and where the respective gaps meet. For example, as depicted, ends 130a of the first portions 130 may be mitred so as to interface with a neighbouring first portion end. The second portion 150 may not be present (e.g., may be removed) at the join between the respective first portion ends 130a. As shown in Figure 14, a cover portion 180 may extend over the respective ends 130a of the first portions 130 where they abut. The pressure of the fluid on the first side 104 of the components may urge the cover portion 180 into sealing engagement with the first portions 130.

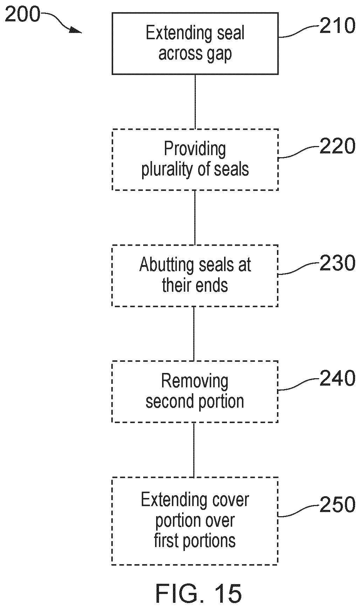

A method 200 of sealing gap 102 will now be described with reference to FIG 15. In a first block 210, the method 200 comprises extending the seal 100 across gap 102. When the fluid on the first side 104 is at an operating pressure, the first portion 130 may be urged into sealing engagement with the first and second components 110, 120. In a second block 220, the method 200 may optionally comprise providing a plurality of the seals 100. In a third block 230, the method 200 may optionally comprise abutting the seals 100 against one another at respective ends so as to seal respective gaps that meet at a point. In a fourth block 240, the method 200 may optionally comprise removing the second portion 150 of the seal 100 at the respective ends of the seals where they abut. In a fifth block 250, the method 200 may optionally comprise extending a cover portion 180 over the first portions of the respective ends of the seals where they abut. It will be appreciated that the method blocks 210-250 may be performed in a different order and that one or more of the method blocks may be omitted.

When compared against the previously-proposed fingers seals, such as those shown in Figure 2, the seal 100 exhibits the following properties:
- The sealing point of contact may be significantly closer to the edge of the first and second components.
- The cavity size under the seal may be significantly smaller.
- Easier to integrate in an assembly; joining different sections, transitioning to other seal types may be significantly simplified and less likely to leak.
- Form and spring rate may be tailorable without requiring significant extra room or blockage.
- Can be made low-profile for areas with minimal free space.
- Lower blockage of high-pressure region.
- Can be adapted to seal non-parallel joints.

Furthermore, when compared against the previously-proposed strip seals, such as those shown in Figure 3, the seal 100 exhibits the following properties:
- Larger range of movement may be accommodated.
- Lower leakage rate anticipated.
- No structures required on the back of the first and second components.
- Easier assembly.
- Lower part count.

Various examples have been described, each of which comprise one or more combinations of features. It will be appreciated by those skilled in the art that, except where clearly mutually exclusive, any of the features may be employed separately or in combination with any other features and the disclosure extends to and includes all combinations and sub-combinations of one or more features described herein.

## Claims

1. A seal for sealing a longitudinally extending gap between a first component and a second component, wherein the seal comprises:
a first portion extending in a longitudinal direction and configured to bridge the gap between the first component and the second component, wherein a sealing surface of the first portion is configured to face the first and second components and is curved with a first convex section configured to sealingly contact the first component, a second convex section configured to sealingly contact the second component, and a concave section provided between the first and second convex sections; and
at least one second portion coupled to the first portion and configured to resiliently urge the first portion into engagement with the first and second components, wherein the second portion comprises at least one opening configured to fluidically communicate a pressure of a fluid on a first side of the first and second components to a pressure surface of the first portion opposite the sealing surface.

2. The seal of Claim 1, wherein the seal comprises a pair of second portions, with one of the second portions being coupled to the first portion at the first convex section and the other of the second portions being coupled to the first portion at the second convex section.

3. The seal of Claim 1 or Claim 2, wherein the second portion has a first end and a second end, the first end being coupled to the first portion of the seal.

4. The seal of Claim 3, wherein the second portion has a bend between the first and second ends.

5. The seal of any one of claims 3 or 4, wherein the second end of the second portion is configured to engage a rigid mount spaced apart from the first and second components.

6. The seal of any one of the preceding claims, wherein the first and second portions are formed from a common sheet of material.

7. The seal of any one of the preceding claims, wherein at least one of the first and second portions are formed from a metal.

8. The seal of any one of the preceding claims, wherein an apex of the concave section is spaced apart from a line joining contact points of the first and second convex sections by a first distance and the contact points of the first and second convex sections are spaced apart by a second distance along the line joining contact points of the first and second convex sections.

9. The seal of Claim 8, wherein the first distance is between approximately 5% and 25% of the second distance.

10. The seal of any one of the preceding claims, wherein the first portion is segmented with a plurality of first portion openings distributed along the length of the first portion.

11. The seal of Claim 10, wherein the seal further comprises a plurality of segment covers configured to cover respective first portion openings.

12. A seal assembly comprising at least one seal according to any one of the preceding claims.

13. The seal assembly of Claim 12, wherein the seal assembly comprises a plurality of the seals according to any one of Claims 1 to 11, the seals being configured to abut one another at respective ends so as to seal respective gaps that meet at a point.

14. A method of sealing a longitudinally extending gap between a first component and a second component, the method comprising extending the seal of any one of Claims 1 to 11 or the seal assembly of any one of Claims 12 to 13 across at least one gap.

15. The method of Claim 14, wherein the method further comprises:
providing a plurality of the seals according to any one of Claims 1 to 11, and
abutting the seals against one another at respective ends so as to seal respective gaps that meet at a point.
